# EUROPEAN PATENT APPLICATION

(11) **EP 1 489 115 A1**
(43) Date of publication of application: **22.12.2004**
(21) Application number: 03715518.1
(22) Date of filing: 27.03.2003
(51) Int. Cl.: C08F 236/12, C08L 9/04

(54) **LATEX, FLUID TREATMENTS FOR BONDING, FIBROUS MEMBERS, AND COMPOSITE MEMBERS CONSISTING OF FIBROUS MEMBERS AND VULCANIZED RUBBER MEMBERS**

(30) Priority: 28.03.2002 JP 2002090921
(71) Applicant: Zeon Corporation, Tokyo 100-8323 (JP)
(72) Inventor: NAKAMURA, Masayuki, c/o ZEON CORPORATION, Chiyoda-ku, Tokyo 100-8323 (JP); KAWANAKA, Takafumi, c/o ZEON CORPORATION, Chiyoda-ku, Tokyo 100-8323 (JP)
(74) Representative: Albrecht, Thomas, Dr.
(86) International application number: PCT/JP2003/003841
(87) International publication number: WO 2003/082939

(57) **Abstract**

A latex of a cyano-bearing copolymer rubber which contains units derived from an α,β-ethylenically unsaturated nitrile monomer in an amount of 10 to 30 % by mass and has an iodine number of 250 or below, a Mooney viscosity (ML₁₊₄, 100°C) of 10 to 120, and a difference (Δ Tg) between extrapolated glass transition initiation temperature (Tig) and extrapolated glass transition ending temperature (Teg) of 15°C or below as determined by differential scanning calorimetry; and fluid treatments for bonding and adhesive compositions, containing the latex. The adhesive compositions are excellent in heat resistance, oil resistance, and adhesion to vulcanized rubbers, and exhibit tackiness.

## Description

### Technical Field

The present invention relates to a fluid treatment for bonding (an adhesive treatment solution) forming an adhesive composition layer excellent in adhesion between a fibrous member(a fiber member) and a vulcanized rubber member and having sufficient tackiness, a fiber member treated with the adhesive treatment solution, and a composite member of the fiber member and a vulcanized rubber member.

### Background Art

In recent years, nitrile group-containing copolymer rubber having a low iodine value, represented by hydrogenated acrylonitrile-butadiene copolymer rubber, attracts attention. This nitrile group-containing copolymer rubber is superior in heat resistance and oil resistance to general nitrile group-containing copolymer rubber having many carbon-carbon unsaturated bonds in a main chain structure such as acrylonitrile-butadiene copolymer rubber.

An adhesive composition containing a latex of this nitrile group-containing copolymer rubber is excellent in heat resistance, oil resistance and adhesion to the surface of vulcanized rubber. Accordingly, it is proposed that by making a composite of a fiber member treated with this adhesive composition and a vulcanized rubber member, a member excellent in mechanical strength is obtained (Japanese Patent Application Laid-Open No. 8-100085). For example, when this adhesive composition is used in producing a belt by combining a glass core wire produced by twisting glass fibers with a belt substrate of vulcanized, nitrile group-containing copolymer rubber, a belt having the glass core wire bonded strongly to the belt substrate can be formed.

However, this adhesive composition is poor in tackiness, and production of a belt by using this adhesive composition is problematic. That is, the adhesive composition is poor in tackiness, and thus there is a possibility that glass fibers in the glass core wire are easily untied due to loading applied in using the belt, and the untied brittle fibers are cut and the whole of the glass core wire is cut.

### Disclosure of the Invention

The object of the present invention is to provide an adhesive composition which is excellent in heat resistance and oil resistance, is superior in adhesion to vulcanized rubber, and has tackiness.

The present inventors made extensive study to solve the problem, and as a result, they found that an adhesive composition prepared from a latex of nitrile group-containing copolymer rubber having a specific composition of the copolymer and showing a small temperature difference between extrapolated glass transition initiation temperature (Tig) and extrapolated glass transition end temperature (Teg) measured by differential scanning calorimetry is excellent in adhesiveness and strongly bonds a fiber member to a vulcanized rubber member, and on the basis of this finding, the present invention was completed.

According to a first aspect of the invention, there is provided a latex of nitrile group-containing copolymer rubber containing 10 to 30 mass% α,β-ethylenically unsaturated nitrile monomer unit, having an iodine value of 250 or less and a Mooney viscosity (ML₁₊₄, 100°C) of 10 to 120, and showing a temperature difference of 15°C or less between extrapolated glass transition initiation temperature (Tig) and extrapolated glass transition end temperature (Teg) measured by differential scanning calorimetry. According to a second aspect of the invention, there is provided an adhesive treatment solution comprising the latex and a resorcinol/formaldehyde resin. According to a third aspect of the invention, there is provided an adhesive composition comprising a resorcinol/formaldehyde resin and nitrile group-containing copolymer rubber particles containing 10 to 30 mass% α,β-ethylenically unsaturated nitrile monomer unit, having an iodine value of 250 or less and a Mooney viscosity (ML₁₊₄, 100°C) of 10 to 120, and showing a temperature difference of 15°C or less between extrapolated glass transition initiation temperature (Tig) and extrapolated glass transition end temperature (Teg) measured by differential scanning calorimetry. According to a fourth aspect of the invention, there is provided a fiber member comprising a layer of the adhesive composition formed on at least a part of the surface of the fiber member. According to a fifth aspect of the invention, there is provided a method of producing a fiber member, which comprises applying and drying the adhesive treatment solution on at least a part of the surface of a fiber substrate. According to a sixth aspect of the invention, there is provided a composite member comprising the fiber member bonded to a vulcanized rubber member. According to a seventh aspect of the invention, there is provided a method of producing a fiber member/vulcanized rubber composite member, which comprises bringing a vulcanizing rubber composition into contact with an adhesive composition layer formed on the surface of a fiber member and then vulcanizing it.

### Best Mode for Carrying Out the Invention

Hereinafter, the present invention is described in more detail.

The latex of the present invention is a latex of nitrile group-containing copolymer rubber containing 10 to 30 mass% α,β-ethylenically unsaturated nitrile monomer unit, having an iodine value of 250 or less and a Mooney viscosity (ML₁₊₄, 100°C) of 10 to 120, and showing a temperature difference of 25°C or less between extrapolated glass transition initiation temperature (Tig) and extrapolated glass transition end temperature (Teg) measured by differential scanning calorimetry.

The nitrile group-containing copolymer rubber used in the present invention contains 10 to 30 mass% α,β-ethylenically unsaturated nitrile monomer unit, has an iodine value of 250 or less and a Mooney viscosity (ML₁₊₄, 100°C) of 10 to 120, and shows a temperature difference of 15°C or less between extrapolated glass transition initiation temperature (Tig) and extrapolated glass transition end temperature (Teg) measured by differential scanning calorimetry.

The α,β-ethylenically unsaturated nitrile monomer includes acrylonitrile, α-halogenoacrylonitrile such as α-chloroacrylonitrile and α-bromoacrylonitrile, and α-alkylacrylonitrile such as methacrylonitrile and ethacrylonitrile, among which acrylonitrile is preferable.

The content of the α,β-ethylenically unsaturated nitrile monomer unit (referred to hereinafter as monomer unit (a)) in the nitrile group-containing copolymer rubber is 10 to 30 mass%, preferably 12 to 25 mass%, more preferably 17 to 23 mass%. When the content of the monomer unit (a) is too low, the resulting adhesive composition is inferior in adhesiveness, while when the content is too high, the composition is inferior in tackiness.

In production of the nitrile group-containing copolymer rubber, a monomer copolymerizable with the α,β-ethylenically unsaturated nitrile monomer is exemplified by a conjugated diene monomer, a non-conjugated diene monomer and α-olefin. The conjugated diene monomer includes, for example, 1,3-butadiene, isoprene, 2,3-dimethyl-1,3-butadiene, 1,3-pentadiene etc., among which 1,3-butadiene is preferable. The non-conjugated diene monomer is preferably the one having 5 to 12 carbon atoms, and examples include 1,4-pentadiene, 1,4-hexadiene, vinylnorbornene, dicyclopentadiene etc. The α-olefin is preferably the one having 2 to 12 carbon atoms, and examples include ethylene, propylene, 1-butene, 4-methyl-1-pentene, 1-hexene, 1-octene etc. The monomer unit (a) may also be copolymerized with an aromatic vinyl monomer, a fluorine-containing vinyl monomer, an α,β-ethylenically unsaturated monocarboxylic acid, an α,β-ethylenically unsaturated dicarboxylic acid or an anhydride thereof, a copolymerizable aging inhibitor etc.

The aromatic vinyl monomer includes, for example, styrene, α-methylstyrene, vinylpyridine etc. The fluorine-containing vinyl monomer includes, for example, fluoroethyl vinyl ether, fluoropropyl vinyl ether, o-trifluoromethyl styrene, vinyl pentafluorobenzoate, difluoroethylene, tetrafluoroethylene etc. The α,β-ethylenically unsaturated monocarboxylic acid includes, for example, acrylic acid, methacrylic acid etc. The α,β-ethylenically unsaturated dicarboxylic acid includes, for example, itaconic acid, fumaric acid, maleic acid etc. The α,β-ethylenically unsaturated dicarboxylic anhydride includes, for example, itaconic anhydride, maleic anhydride etc. The copolymerizable aging inhibitor includes, for example, N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline etc.

The iodine value of the nitrile group-containing copolymer rubber of the present invention is 250 or less, preferably 200 or less, more preferably 180 or less. When the iodine value is too high, the adhesive composition is inferior in heat resistance.

The Mooney viscosity (ML₁₊₄, 100°C) of the nitrile group-containing copolymer rubber of the present invention is 100 to 120, preferably 15 to 80, more preferably 20 to 60. When the Mooney viscosity is too low, the adhesive composition may be inferior in mechanical strength, while when the Mooney viscosity is too high, the composition may be inferior in tackiness.

The temperature difference (ΔTg) between the extrapolated glass transition initiation temperature (Tig) and extrapolated glass transition end temperature (Teg) of the nitrile group-containing copolymer rubber of the present invention, as determined by differential scanning calorimetry prescribed in JIS K7121 (Method of Measuring Transition Temperature of Plastics), is 15°C or less, preferably 14°C or less, more preferably 13°C or less. When this temperature difference (ΔTg) is too great, the adhesive composition of the present invention is inferior in tackiness.

To allow the temperature difference (ΔTg) between the extrapolated glass transition initiation temperature (Tig) and the extrapolated glass transition end temperature (Teg) to be in the above range, the compositional distribution breadth of the monomer unit (a) in the nitrile group-containing copolymer rubber and the compositional distribution breadth of the monomer unit (referred to hereinafter as monomer (b)) copolymerizable with the α,β-ethylenically unsaturated nitrile monomer is preferably 80 mass% or less, more preferably 70 mass% or less, still more preferably 55 mass% or less. The compositional distribution breadth of each monomer refers to the ratio of [difference between the maximum and minimum contents of each monomer in a minute part of the polymer] to [content of each monomer in the whole polymer]. The minute part of the polymer refers to a very small part of the polymer, and refers to a part accounting for preferably 1 to 5 mass%, more preferably 2 to 4 mass%, of the molecular weight of the polymer. The compositional distribution breadth is determined usually based on measurements of a change with time in the amount of the unreacted monomer in the polymerization reaction. When the compositional distribution breadth is too broad, the temperature difference (ΔTg) may be too great.

The structure of the monomer unit may be changed by treatment such as hydrogenation after the completion of polymerization. In this case, the compositional distribution breadth shall be in the above range, assuming that the monomer unit before and after change is the same monomer unit. For example, when butadiene is copolymerized and hydrogenated after the completion of copolymerization, at least a part of unsaturated bonds of butadiene units are hydrogenated to form saturated butadiene units. In this case, it is assumed that the saturated butadiene unit is the same as the butadiene unit, and the compositional distribution breadth of the two kinds of units in total shall be in the above range.

When plural kinds of monomers are used as the monomer copolymerizable with the α,β-ethylenically unsaturated nitrile monomer, the compositional distribution breadth of the respective monomers is preferably in the above range. When plural kinds of monomers are used as the α,β-ethylenically unsaturated nitrile monomer, the compositional distribution breadth of the respective monomers is also preferably in the above range.

The content of the monomer unit (a) or (b) in the nitrile group-containing copolymer rubber can be determined by a combination of a plurality of measurement methods such as nitrogen content measurement by a semimicro-Kjeldahl method, measurement of the amount of unsaturated bonds by analysis of IR absorption spectrum or measurement of iodine value, identification of a partial structure by analysis of IR absorption spectrum, ¹H-NMR, ¹³C-NMR, pyrolysis gas chromatography etc. , andmeasurement of amount ratio. Generally, the identification of a partial structure and measurement of amount ratio by ¹H-NMR are the most reliable, but there is the case where analysis is not feasible because of overlapping of a plurality of peaks in ¹H-NMR chart, and it is thus desired in analysis to use ¹H-NMR in combination with other methods.

In the latex of the present invention, the nitrile group-containing copolymer rubber exists as particles, and the average diameter of the particles is preferably 50 to 150 µm, more preferably 70 to 120 µm, still more preferably 80 to 100 µm. When the particle diameter is too small, the particles are easily aggregated, while when the particle diameter is too large, the particles are precipitated, thus making storage thereof or preparation of the adhesive treatment solution difficult.

The method of producing the latex according to the present invention is not particularly limited, but usually emulsion polymerization is used. Polymerization assistants used generally in emulsion polymerization, such as an emulsifying agent, a polymerization initiator and a molecular-weight regulator, may be used. The type and amount of these additives are not particularly limited insofar as the nitrile group-containing copolymer rubber latex can be obtained.

When the latex of the present invention is to be produced by emulsion polymerization, the compositional distribution breadth of the monomer unit is regulated so as to be in the specific range during polymerization as described above, to polymerize rubber whose extrapolated glass transition initiation temperature (Tig) and extrapolated glass transition end temperature (Teg) show a temperature difference (ΔTg) in the above-defined range. The polymerization reaction conditions for regulating the compositional distribution breadth may be previously determined by a preliminary experiment. In the preliminary experiment, the amount of each monomer in the polymerization reaction solution is measured as the polymerization proceeds, preferably every time the degree of polymerization conversion is increased by 1 to 5 mass%, more preferably every time the degree of polymerization conversion is increased by 2 to 4 mass%, whereby the content of each monomer in a minute part of the polymer is determined. The polymerization reaction conditions are determined such that the compositional distribution breadth determined on the basis of the content comes to be in the range described above. Generally, the compositional distribution breadth is controlled by additionally adding a specific amount of each monomer at a predetermined point in time. Examination of the polymerization reaction conditions can also be made by computer simulation etc. , and its result may be confirmed in the experiment.

To allow the iodine value of the polymerized rubber to be 250 or less, hydrogenation reaction is necessary. For this reaction, a hydrogenation catalyst may be added in a necessary amount to an aqueous emulsifying agent solution having the rubber particles dispersed therein, followed by bringing the rubber particles in the aqueous emulsifying agent solution into contact with hydrogen. The hydrogenation catalyst is not particularly limited. The hydrogenation catalyst can be used as a supported catalyst having a catalytic component supported on a carrier and introduced into a reaction system. The hydrogenation catalyst can also be used as a non-supported catalyst which without supporting a catalytic component on a carrier, is dissolved or dispersed directly in a reaction system. Further, the supported and non-supported catalysts can be simultaneously used. The hydrogenation temperature is preferably 20 to 150°C, more preferably 30 to 100°C. When the hydrogenation temperature is too low, the reaction rate may be low, while when the temperature is too high, side reactions such as hydrogenation of nitrile group may occur. A hydrogen gas is used as the hydrogen source and may be brought into contact with the nitrile group-containing unsaturated copolymer rubber in latex form. The hydrogen pressure is preferably atmospheric pressure to 150 kg/cm², more preferably 5 to 100 kg/cm². When the hydrogen pressure is too low, the reaction rate may be low, while when the hydrogen pressure is too high, the safety of facilities etc. may be problematic. After the hydrogenation reaction is finished, the hydrogenation catalyst is preferably removed, but if its amount is in such a range as not to influence tackiness, the catalyst may remain. The method of removing the hydrogenation catalyst is not particularly limited, and for example, the hydrogenation catalyst may be removed by bringing the reaction mixture into contact with ion-exchange resin to adsorb it onto the resin.

The solids content of the latex of the present invention is preferably 10 to 60 mass%, more preferably 20 to 50 mass%, still more preferably 35 to 45 mass%. When the solids content is too low, a uniform adhesive treatment solution may not be prepared, while when it is too high, the composition may be inferior in shelf stability.

The adhesive treatment solution of the present invention comprises the latex and a resorcinol/formaldehyde resin. The adhesive treatment solution is the one wherein the components in the adhesive composition for bonding a pair of substrates to each other in a composite material are dispersed in an aqueous medium.

The resorcinol/formaldehyde resin used in the present invention is a resin obtained by reacting resorcinol with formaldehyde. It may be a novolak type or resol type, and the amount of formaldehyde reacting with 1 mole of resorcinol is preferably 0.1 to 3.5 moles, more preferably 0.2 to 3 moles. The reaction method is not particularly limited, and the reaction may be carried out by a known method.

The amount of the resorcinol/formaldehyde resin blended with 100 parts by weight of the nitrile group-containing copolymer rubber particles dispersed in the latex is preferably 3 to 60 parts by weight, more preferably 5 to 40 parts by weight, still more preferably 10 to 30 parts by weight. When the amount of the resorcinol/formaldehyde resin blended is too low, the adhesive composition may be poor in adhesiveness, while when the amount is too high, the adhesive composition may be poor in tackiness.

The adhesive composition of the present invention comprises a resorcinol/formaldehyde resin and nitrile group-containing copolymer rubber particles containing 10 to 30 mass% α,β-ethylenically unsaturated nitrile monomer unit, having an iodine value of 250 or less and a Mooney viscosity of 10 to 120, and showing a temperature difference of 15°C or less between extrapolated glass transition initiation temperature (Tig) and extrapolated glass transition end temperature (Teg) measured by differential scanning calorimetry.

The type of the nitrile group-containing copolymer rubber particles and the resorcinol/formaldehyde resin and the ratio of the two are the same as in the latex and the adhesive treatment solution described above.

The water content in the adhesive composition is preferably 1 mass% or less, more preferably 0.5 mass% or less, more preferably 0.1 mass% or less. When the water content is too high, the adhesiveness and tackiness may be lowered. After adhesion, the water may cause foaming and release of the adhesive-bonded substrate.

The method of producing the adhesive composition is not particularly limited, but generally the adhesive composition is produced by removing water from the adhesive treatment solution: specifically, a coating film formed by applying the adhesive treatment solution onto the surface of at least one of a pair of substrates intended to be adhesive-bonded and then drying the solution is used as an adhesive composition layer. The coating method is not particularly limited, and may be carried out by brushing, spraying or dipping. The method of drying water is not particularly limited, and the adhesive treatment solution may be treated by a combination of reduced pressure and heating.

The thickness of the adhesive composition layer is not particularly limited. For example, when the adhesive composition is applied to a glass fiber strand of about 0.1 mm in thickness, the thickness of the composition after drying is preferably 0.1 to 10 µm, more preferably 0.2 to 5 µm, still more preferably 0.5 to 2 µm. A too thick layer is not preferable because the strength of a glass fiber cord obtained by twisting the strands is adversely influenced. On the other hand, when the adhesive composition layer is to be formed by a method of spraying or dipping a woven or nonwoven fabric, the thickness of the composition after drying is preferably 0.1 to 100 µm, more preferably 0.5 to 100 µm, still more preferably 1 to 50 µm.

Preferable examples of one substrate out of a pair of substrates to be adhesive-bonded to each other include fiber substrates, and reinforcing fiber substrates such as a nonwoven fabric formed from fibers, a thread having fibers twisted therein, a fabric having such threads woven therein, and a cord having fibers twisted therein are preferable. Preferable fibers include glass fiber, polyester fiber, polyamide fiber, polybenzobisoxazole fiber etc.

The fiber member of the present invention has a layer of the adhesive composition formed on at least a part of the surface of a fiber substrate. When the fiber substrate is a thread or cord, the adhesive composition layer may be formed on the surface of a thread or cord obtained by twisting fibers to form the fiber member, or a fiber or a strand of bundled fibers may be coated thereon with the adhesive treatment solution to form a layer of the adhesive composition and then twisted to give a thread or cord used as the fiber member. A woven fabric using the threads obtained in this manner may be used as the fiber member.

Particularly in the fiber member made of a thread or cord produced by twisting fibers having the adhesive composition layer formed thereon, the twisted fibers are hardly frayed, and even if the fibers in the twisted thread or cord are partially cut, such cutting hardly causes fray. This is preferable in that the strength of the fiber member can be maintained by preventing fray.

The surface of the formed layer of the adhesive composition is excellent in adhesion to a vulcanized rubber member. In particular, the adhesive composition layer while being into contact with a vulcanizable rubber composition is vulcanized, whereby the fiber member and the vulcanized rubber member can be strongly bonded to each other.

The method of producing the fiber member is not particularly limited, but a method that involves applying the adhesive treatment solution onto at least a part of the surface of a fiber member and then drying it is generally used.

Preferable examples of the other substrate out of a pair of substrates intended to be adhesive-bonded include vulcanized rubber members such as belt, tire and hose. Non-vulcanized rubber serving as the starting material thereof is not particularly limited, but preferable rubber includes nitrile group-containing copolymer rubber, and particularly preferable rubber includes nitrile group-containing copolymer rubber having an iodine value of 100 or less. The non-vulcani zed rubber may be compounded if necessary with general additives such as reinforcing materials such as silica, carbon etc. , fillers such as talc, clay etc., stabilizers such as an antioxidant, a weathering agent etc., and pigments. By compounding the non-vulcanized rubber with a vulcanizing agent suitable for the characteristics of the rubber, a vulcanizable rubber composition is prepared and then vulcanized to give a vulcanized rubber member. In the case of the nitrile group-containing copolymer rubber, sulfur, a sulfur-based vulcanizing agent such as morpholine disulfide, or an organic peroxide vulcanizing agent is generally used.

The composite member of the present invention comprises a fiber member adhesive-bonded to a vulcanized rubber member. The method of producing the composite member is not particularly limited, but a method that involves bringing an adhesive composition layer formed on the surface of a fiber member into contact with a vulcanizable rubber composition and then vulcanizing the vulcanizable rubber composition is preferably used. According to this method, a composite member having the fiber member bonded strongly to the vulcanized rubber member can be obtained.

The method of bringing the adhesive composition layer formed on the surface of a fiber member into contact with a vulcanizable rubber composition is not particularly limited. Depending on the object, a two-layer structure of the fiber member and the vulcanizable rubber composition may be formed, or the fiber member may be buried in the vulcanizable rubber composition. Molding and vulcanization may besimultaneously conducted; molding may be followed by vulcanization; or after vulcanization, the composite member may be cut and molded. For example, the fiber member and the vulcanizable rubber composition can be fixed respectively in predetermined positions in a mold, whereby the adhesive composition layer is brought into contact with the vulcanizable rubber composition, and the mold can be heated to effect molding and vulcanization simultaneously. Alternatively, the fiber member may be laminated on the vulcanizable rubber composition in plate form previously subjected to extrusion molding, whereby the layer of the adhesive composition is brought into contact with the vulcanizable rubber composition, followed by vulcanization by heating.

### Examples

Hereinafter, the present invention is described in more detail by reference to the Examples. Unless otherwise specified, "parts" refer to parts by weight.

The content of each monomer unit in the nitrile group-containing copolymer rubber is a value determined on the basis of ¹H-NMR, iodine content measurement, and nitrogen content measurement by the semimicro-Kjeldahl method. It was confirmed that this value does not contradict a difference between the amount of the monomer used in polymerization and the amount of the remaining monomer.

The extrapolated glass transition initiation temperature (Tig) and extrapolated glass transition end temperature (Teg)were measured by heatreflux differential scanning calorimetry according to JIS K7121. However, the rate of heating was changed from 20°C/min. to 10°C/min. in measurement in order to measurement accuracy.

The iodine value and Mooney viscosity (ML₁₊₄, 100°C) were measured according to JIS K 6235 and JIS K 6300, respectively.

The adhesion of a glass fiber cord to a vulcanized rubber was measured by a method described later according to JIS K 3256.

The tackiness between glass and the adhesive composition was measured by using a Tel-Tack meter (model TT-1 manufactured by Monsanto, JP-B 47-12830) Reference Example 1

Palladium nitrate (manufactured by NE Chemcat Corporation) was dissolved at a palladium concentration of 10 mass% in distilled water to prepare 100 ml aqueous solution of palladium nitrate. While the pH of this aqueous solution was monitored, the pH was adjusted to 12 by adding sodium hydroxide (solid). 20 ml of this aqueous basic solution was mixed with 1L separately prepared carrier slurry (carrier:magnesium silicate manufactured by Tomita Pharmaceutical Co., Ltd.; the amount of the carrier in the slurry: 100 g). The pH of the slurry after being mixed was 12. The mixture was stirred for 30 minutes, and then solids were separated by filtration and washed sufficiently with distilled water. The recovered solids were vacuum-dried at 60°C for 20 hours to give a supported catalyst. The amount of palladium supported thereon, as determined by the atomic-absorption method, was 2 mass%.

### Example 1

A reactor was charged with an emulsifying agent consisting of 205 parts of deionized water and 3 parts of sodium dodecyl sulfate (emulsifying agent), and then 11 parts of acrylonitrile, 89 parts of 1,3-butadiene, 0.54 part of t-dodecyl mercaptan (molecular-weight regulator), 0.015 part of ferrous sulfate (activator) and 0.043 part of p-menthane hydroperoxide (polymerization initiator) were added thereto, and while the degree of polymerization conversion was measured, the emulsion polymerization of the mixture was initiated at 10°C. When the degree of polymerization conversion reached 26%, 4.3 parts of acrylonitrile were added. When the degree of polymerization conversion reached 41% upon adding the added acrylonitrile to a criterion for calculating the degree of polymerization conversion, 4.3 parts of acrylonitrile were further added. When the degree of polymerization conversion reached 59% upon adding this additionally added acrylonitrile to a criterion for calculating the degree of polymerization conversion, 4.3 parts of acrylonitrile were added again. When the degree of polymerization conversion reached 80% upon adding this additionally added acrylonitrile to a criterion for calculating the degree of polymerization conversion, 0.129 part of hydroxylamine sulfate was added to terminate the polymerization. During the polymerization, a very small amount of the polymerization reaction solution was collected and analyzed every time the degree of polymerization conversion was increased by 3%, and the content of each monomer in a minute part of the polymer was determined. The results are shown in Table 1. Following termination of the polymerization, the reaction solution was heated, and the unreacted monomer was recovered by steam distillation at 70°C under reduced pressure, and then 2 parts of 2,6-di-tert-butyl-4-methyl phenol (aging inhibitor) were added to the reaction mixture, whereby a nitrile group-containing copolymer rubber latex was obtained. The content of acrylonitrile in the nitrile group-containing copolymer rubber contained in this latex was 22.5%, the iodine value was about 364, the Mooney viscosity (ML₁₊₄, 100°C) was 30, and ΔTg was 13°C.

The hydrogenation catalyst obtained in Reference Example 1 was added to the nitrile group-containing copolymer rubber latex such that the amount of the palladium became 1600 ppm, and the latex was hydrogenated at 50°C by blowing a hydrogen gas at a hydrogen pressure of 5 MPa until the iodine value reached 160, to give a hydrogenated nitrile group-containing copolymer rubber latex. The content of acrylonitrile in the nitrile group-containing copolymer rubber contained in this latex was 22.5%, the Mooney viscosity (ML₁₊₄, 100°C) was 30, and ΔTg was 13°C.

To the resulting hydrogenated nitrile group-containing copolymer rubber latex was added a resorcinol/formaldehyde resin (reaction product of 1 mol resorcinol and 1 mol formaldehyde, manufactured by Wako Pure Chemical Industries) in an amount of 20 parts relative to 100 parts of the rubber particles, and the mixture was stirred slowly until it became uniform, whereby an adhesive treatment solution was prepared.

This adhesive treatment solution was applied onto each of glass fiber strands (filament diameter, 9 µm; 101 Tex (number of filaments, 600)) having a non-alkali glass composition (SiO₂, 64.4%; Al₂O₃, 25%; CaO, 0.3%; MgO 10.0%; B₂O₃, 0.1%; Na₂O and K₂O in total, 0.2%) such that the thickness of the adhesive composition layer became about 1.5 µm, and the strands were heat-treated at 280°C for 1 minute and then subjected to preliminary twisting 2.1 times per inch, and 11 strands were combined and subjected to final twisting 2.1 times per inch in the opposite direction to the preliminary twisting, to give a glass fiber cord.

60 parts of carbon black N550, 5 parts of zinc white No. 1, 1 part of stearic acid, 10 parts of trioctyl trimellitate, 1.5 parts of 4,4-(α,α-dimethylbenzyl)diphenylamine, 1.5 parts of mercaptobenzothiazole zinc salt, 1.5 parts of tetramethyl thiuram disulfide, 0.5 part of sulfur and 1 part of cyclohexyl benzothiazyl sulfonamide were incorporated into 100 parts of hydrogenated acrylonitrile/butadiene copolymer rubber (Zet Pole 2020 manufactured by Nippon Zeon Co., Ltd.; acrylonitrile unit content, 36.2%; iodine value 28; Mooney viscosity (ML₁₊₄, 100°C) 78), to prepare a vulcanizable rubber composition. This vulcanizable rubber composition was molded into a sheet of 5 mm in thickness by a press pressure of 5 MPa.

The above glass fiber cords were arranged in a size of 12 cm in length and 25 mm in width on the sheet molding of the vulcanizable rubber composition and then vulcanized at 150°C for 30 minutes at a press pressure of 5 MPa to give an adhesion test specimen. The resulting test specimen was measured for the initial adhesion between the glass fiber cord and the vulcanized rubber in a peel test according to JIS K 6256. The content of the glass fiber cord in the test specimen was about 30 mass%.

The resulting adhesive treatment solution was used to measure the tackiness between glass and the adhesive composition. The results are shown in Table 1.

### Comparative Example 1

A nitrile group-containing copolymer rubber latex was obtained by polymerization in the same manner as in Example 1 except that upon initiation of polymerization, the amount of acrylonitrile was changed from 11 parts to 20 parts, the amount of 1,3-butadiene was changed from 89 parts to 80 parts, and during the polymerization, no additional acrylonitrile was added. The content of acrylonitrile in the nitrile group-containing copolymer rubber contained in this latex was 22.9%, the iodine value was about 360, the Mooney viscosity (ML₁₊₄, 100°C) was 30, and ΔTg was 44°C. This latex was hydrogenated in the same manner as in Example 1 to give hydrogenated nitrile group-containing copolymer rubber latex. The content of acrylonitrile in the hydrogenated nitrile group-containing copolymer rubber contained in this latex was 22.9%, the iodine value was about 160, the Mooney viscosity (ML₁₊₄, 100°C) was 30, and ΔTg was 42°C. Using this hydrogenated nitrile group-containing copolymer rubber latex, an adhesive treatment solution and an adhesion test specimen were obtained in the same manner as in Example 1, and the initial adhesion between the glass fiber cord and the vulcanized rubber and the tackiness between glass and the adhesive composition were measured. The results are shown in Table 1.

### Comparative Example 2

A nitrile group-containing copolymer rubber latex was obtained by polymerization in the same manner as in Example 1 except that the amount of t-dodecylmercaptan was changed from 0.54 part to 0.05 part. The content of acrylonitrile in the nitrile group-containing copolymer rubber contained in this latex was 22.5%, the iodine value was about 364, the Mooney viscosity (ML₁₊₄, 100°C) was 155, and ΔTg was 13°C. This latex was hydrogenated in the same manner as in Example 1 to give hydrogenated nitrile group-containing copolymer rubber latex. The content of acrylonitrile in the hydrogenated nitrile group-containing copolymer rubber contained in this latex was 22.5, the iodine value was 160, the Mooney viscosity (ML₁₊₄, 100°C) was 150, and ΔTg was 13°C. Using this hydrogenated nitrile group-containing copolymer rubber latex, an adhesive treatment solution and an adhesion test specimen were obtained in the same manner as in Example 1, and the initial adhesion between the glass fiber cord and the vulcanized rubber and the tackiness between glass and the adhesive composition were measured. The results are shown in Table 1.

### Comparative Example 3

The same treatment as in Example 1 was carried out except that the nitrile group-containing copolymer rubber latex before hydrogenation was used in place of the hydrogenated nitrile group-containing copolymer rubber latex. The results are shown in Table 1. The content of acrylonitrile in the nitrile group-containing copolymer rubber contained in this latex was 22.5%, the iodine value was about 364, the Mooney viscosity (ML₁₊₄, 100°C) was 30, and ΔTg was 13°C.

**Table 1**

| | Example | Comparative Example | | |
|---|---|---|---|---|
| | 1 | 1 | 2 | 3 |
| Nitrile group-containing copolymer rubber | | | | |
| Acrylonitrile unit (a) | | | | |
| Content (mass%) | 22.5 | 22.9 | 22.5 | 22.5 |
| Maximum content in minute part (mass%) | 27.9 | 33.6 | 27.9 | 27.9 |
| Minimum content in minute part (mass%) | 17.4 | 9.6 | 17.4 | 17.4 |
| Compositional distribution breadth (mass%) | 47 | 105 | 47 | 47 |
| Butadiene unit (b) (before hydrogenation) | | | | |
| Content (mass%) | 77.5 | 77.1 | 77.5 | 77.5 |
| Maximum content in minute part (mass%) | 82.6 | 90.4 | 82.6 | 82.6 |
| Minimum content in minute part (mass%) | 72.1 | 66.4 | 72.1 | 72.1 |
| Compositional distribution breadth (mass%) | 13 | 31 | 13 | 13 |
| Extrapolated glass transition initiation temperature (Tig) (°C) | -53 | -70 | -53 | -53 |
| Extrapolated glass transition end temperature (Teg) (°C) | -40 | -28 | -40 | -40 |
| Difference (TgΔ) between Tig and Teg (°C) | 13 | 42 | 13 | 13 |
| Mooney viscosity | 30 | 30 | 150 | 30 |
| Iodine value | 160 | 160 | 160 | 400 |
| Tackiness between glass and adhesive composition (× 10⁵ Pa) | 6.78 | 3.34 | 2.22 | 4.47 |
| Adhesion between glass fiber cord and vulcanized rubber (×10³ N/m) | 8.66 | 7.87 | 8.27 | 9.45 |

Composite members prepared by using adhesive treatment solutions whose nitrile-containing copolymer rubber latex had a too large difference between extrapolated glass transition initiation temperature (Tig) and extrapolated glass transition end temperature (Teg) (Comparative Example 1), too high Mooney viscosity (Comparative Example 2) or too high iodine value (Comparative Example 3) were inferior in tackiness between the fiber member and the adhesive composition layer.

On the other hand, when the latex of the present invention was used, the composite member was excellent not only in adhesion between the glass fiber cord and the vulcanized rubber but also in tackiness.

### Industrial Applicability

The adhesive composition of the present invention is excellent not only in adhesion to nitrile group-containing copolymer rubber having a low iodine value but also in tackiness. Because of excellent tackiness, the adhesive composition can bundle fibers strongly and prevents the deterioration of a reinforcing fiber substrate caused by fraying and cutting of fibers. Accordingly, the adhesive composition of the present invention can be used in production of fiber-reinforced belts, tires and hoses.

## Claims

1. A latex of nitrile group-containing copolymer rubber containing 10 to 30 mass% α,β-ethylenically unsaturated nitrile monomer unit, having an iodine value of 250 or less and a Mooney viscosity (ML₁₊₄, 100°C) of 10 to 120, and showing a temperature difference (ΔTg) of 15°C or less between extrapolated glass transition initiation temperature (Tig) and extrapolated glass transition end temperature (Teg) measured by differential scanning calorimetry.

2. The latex according to claim 1, wherein the temperature difference (ΔTg) is 14°C or less.

3. The latex according to claim 1 or 2, wherein the compositional distribution breadth of each monomer unit in the nitrile group-containing copolymer rubber is 80 mass% or less wherein the compositional distribution breadth of each monomer is the ratio of a difference between the maximum and minimum contents of each monomer in a minute part of the polymer to the content of each monomer in the whole polymer.

4. The latex according to any one of claims 1 to 3,
wherein the compositional distribution breadth of a monomer unit copolymerizable with the α,β-ethylenically unsaturated nitrile monomer is 80 mass% or less wherein the compositional distribution breadth of each monomer is the ratio of a difference between the maximum and minimum contents of each monomer in a minute part of the polymer to the content of each monomer in the whole polymer.

5. The latex according to any one of claims 1 to 4, wherein the content of the α,β-ethylenically unsaturated nitrile monomer unit in the nitrile group-containing copolymer rubber is 12 to 25 mass%.

6. The latex according to any one of claims 1 to 5, wherein the iodine value of the nitrile group-containing copolymer rubber is 200 or less.

7. The latex according to any one of claims 1 to 6, wherein the average particle diameter of the nitrile group-containing copolymer rubber is 50 to 150 µm.

8. An adhesive treatment solution comprising the latex according to any one of claims 1 to 7 and a resorcinol/formaldehyde resin.

9. The treatment solution according to claim 8, wherein the amount of the resorcinol/formaldehyde resin incorporated into 100 parts by weight of the nitrile group-containing copolymer rubber dispersed in the latex is 3 to 60 parts by weight.

10. An adhesive composition comprising a resorcinol/formaldehyde resin and nitrile group-containing copolymer rubber particles containing 10 to 30 mass% α,β-ethylenically unsaturated nitrile monomer unit, having an iodine value of 250 or less and a Mooney viscosity (ML₁₊₄, 100°C) of 10 to 120, and showing a temperature difference (ΔTg) of 15°C or less between extrapolated glass transition initiation temperature (Tig) and extrapolated glass transition end temperature (Teg) measured by differential scanning calorimetry.

11. The adhesive composition according to claim 10, wherein the amount of the resorcinol/formaldehyde resin incorporated into 100 parts by weight of the nitrile group-containing copolymer rubber particles is 3 to 60 parts by weight.

12. The adhesive composition according to claim 10 or 11, wherein the water content in the composition is 1 mass% or less.

13. A fiber member comprising a layer of the adhesive composition according to any one of claims 10 to 12 formed on at least a part of the surface of a fiber member.

14. The fiber member according to claim 13, wherein the thickness of the adhesive composition layer after drying is 0.1 to 10 µm.

15. The fiber member according to claim 13 or 14, wherein the fiber constituting the fiber substrate is selected from the group consisting of glass fiber, polyester fiber, polyamide fiber and polybenzobisoxazole.

16. A method of producing a fiber member, which comprises applying and drying the adhesive treatment solution according to claim 8 or 9 on at least a part of the surface of a fiber substrate.

17. A composite member comprising the fiber member according to any one of claims 13 to 15 adhesive-bonded to a vulcanized rubber member.

18. A method of producing a fiber member/vulcanized rubber composite member, which comprises bringing a vulcanizable rubber composition into contact with an adhesive composition layer formed on the surface of the fiber member according to any one of claims 13 to 15 and then vulcanizing it.
